Europäisches Patentamt

European Patent Office

Office européen des brevets

(19)

(11) **EP 0 593 699 B1**

(12) **EUROPÄISCHE PATENTSCHRIFT**

(45) Veröffentlichungstag und Bekanntmachung des Hinweises auf die Patenterteilung:
**19.06.1996  Patentblatt 1996/25**

(21) Anmeldenummer: **93906423.4**

(22) Anmeldetag: **06.04.1993**

(51) Int Cl.⁶: **G01G 11/04**, G01F 1/30

(86) Internationale Anmeldenummer:
**PCT/CH93/00091**

(87) Internationale Veröffentlichungsnummer:
**WO 93/22633 (11.11.1993 Gazette 1993/27)**

(54) **SCHÜTTGUTWAAGE**

BALANCE FOR BULK MATERIAL

BALANCE POUR MATERIAU EN VRAC(05.01.94)

(84) Benannte Vertragsstaaten:
**CH DE ES FR GB IT LI**

(30) Priorität: **05.05.1992  CH 1439/92**

(43) Veröffentlichungstag der Anmeldung:
**27.04.1994  Patentblatt 1994/17**

(73) Patentinhaber: **K-TRON TECHNOLOGIES, INC.
Wilmington, DE 19801 (US)**

(72) Erfinder: **WIRTH, Johannes
CH-8032 Zürich (CH)**

(74) Vertreter: **Salgo, Reinhold Caspar, Dr.
Patentanwalt
Toebelistrasse 88
CH-8635 Duernten (CH)**

(56) Entgegenhaltungen:
**WO-A-89/11082          DE-A- 3 218 308
DE-A- 3 410 845**

## Beschreibung

Die vorliegende Erfindung bezieht sich auf eine Vorrichtung zum kontinuierlichen Wägen von Schüttgut nach dem Oberbegriff des Patentanspruches 1. Solche Waagen sind mehrere bekannt, so z.B. aus EP 0 299 103 Al, DE 35 41 872 C2. Die zwei genannten Druckschriften sind stellvertretend für jene, in welchen die offenbarte Lehre darin besteht, das Schüttgut aus einer definierten Höhe auf eine unter einem Winkel gegen die Vertikale schiefgestellte Prallplatte fallen zu lassen, und das im elastischen Gelenk dieser Prallplatte entstehende Biegemoment zu ermitteln. Der da beschriebenen Prallplatten-Technik haften einige Mängel an, die einerseits bei ein- und demselben Wägegut zu verhältnismässig grossen Messungenauigkeiten führen, die anderseits den Einsatz der gleichen Wägevorrichtung für unterschiedliche Güter - wie beispielsweise bei Dosiervorgängen - problematisch erscheinen lassen. Da in der bekannten angeführten Technik Momente gemessen werden, ist nicht nur die über eine Impulsänderung zustandekommende Stosskraft massgebend, sondern auch die Stelle, wo das Schüttgut auf die Prallplatte auftrifft. Je nach Beschaffenheit des Gutes sind hier erhebliche Schwankungen möglich. Ferner ist die Art der Impulsübertragung wesentlich: Bei elastischem Stoss ist die übertragene Kraft grösser als bei nichtelastischem; je nach Schüttgut und dessen momentaner Beschaffenheit ist die zu berücksichtigende Stosszahl eine andere. Solche beschriebenen Vorrichtungen liefern nur über eine Eichung mit dem zu wägenden Schüttgut befriedigende Ergebnisse.

Die Aufgabe, die mit der vorliegenden Erfindung gelöst werden soll, liegt in der Ueberwindung der geschilderten Nachteile; es soll eine Wägeeinrichtung geschaffen werden, die unabhängig von der Qualität des Schüttgutes und innerhalb weiter Fördermengenbreiten genaue Resultate über die geforderte zeitbezogene Menge liefert.

Die Lösung der gestellten Aufgabe ist wiedergegeben im Patentanspruch 1 bezüglich ihrer wesentlichen Merkmale, in den Patentansprüchen 2 bis 8 bezüglich weiterer Ausbildungen. Anhand der beigefügten Zeichnungen wird der Erfindungsgegenstand in mehreren Ausführungsbeispielen näher erläutert.

Es zeigen

Fig. 1    ein erstes Ausführungsbeispiel einer erfindungsgemässen Vorrichtung,

Fig. 2    ein zweites Ausführungsbeispiel,

Fig. 3    eine erste Variante eines Details zu Fig. 1 oder 2,

Fig. 4    eine zweite Variante eines Details von Fig. 1 oder 2,

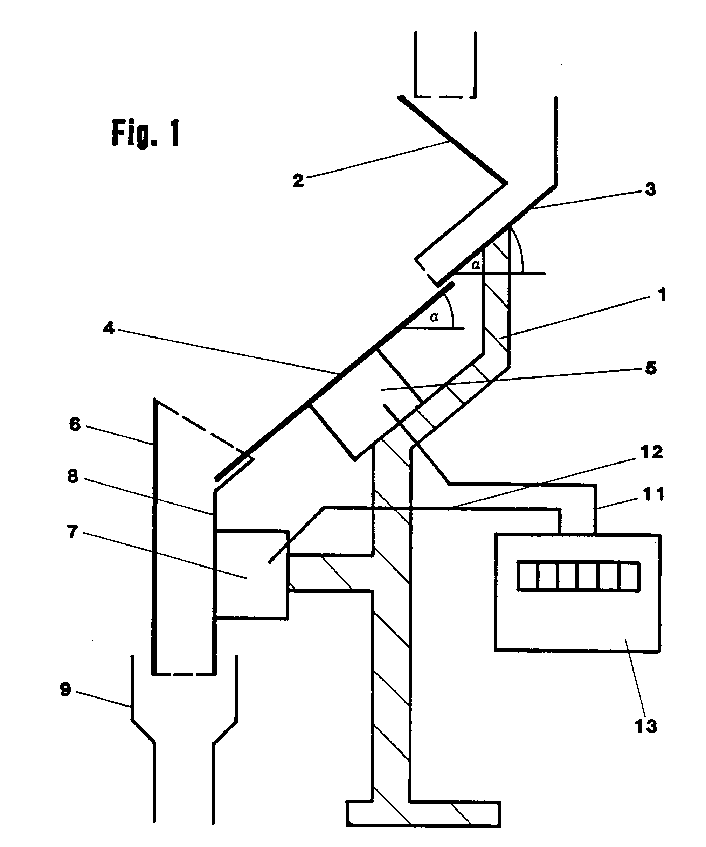

In Fig. 1 ist der Aufbau eines ersten Ausführungsbeispieles in mehr prinzipieller Weise dargestellt. Ein Gestell 1 trägt eine obere Gleitbahn 2 über die das Schüttgut herunterrutscht, entweder aus einem Silo oder von einem Transportband. Anschliessend fällt das Schüttgut auf eine untere Gleitbahn 3, welche einen Neigungswinkel $\alpha$ zur Horizontalen aufweist. Die untere Gleitbahn 3 leitet das Schüttgut auf eine Rutsche 4, welche über einen parallelführenden Kraftmesser 5 am Gestell 1 befestigt ist. Wenn das Schüttgut die Rutsche 4 verlässt, stösst es gegen eine vertikale Prallplatte 6, welche über einen ebenfalls parallelführenden Kraftmesser 7 am Gestell 1 befestigt ist. Die Prallplatte 6 ist mit einem parallel zu ihr verlaufenden Leitblech 8 fest verbunden, das sich nach oben trichterförmig erweitert und unter das Ende der Rutsche 4 greift. Nach der Prallplatte 6 fällt das Schüttgut in einen Trichter 9, welcher die das Schüttgut weiterverarbeitende Vorrichtung schematisiert. Die Aufgabe der Gleitbahnen 2 und 3 ist es, den Fluss des Schüttgutes zu uniformieren, also dafür zu sorgen, dass dieses, weitgehend unabhängig von der zeitbezogenen Menge, am Anfang der Rutsche 4 eine Geschwindigkeit $v_o$ aufweist. Die Menge $\underline{M}$, die sich - bei gleichförmigem Fluss des Schüttgutes - auf der Rutsche 4 befindet, übt auf den Kraftmesser 5 die Kraft $F_R$ aus:

$$F_R = M \cdot g \cdot \cos\alpha \qquad (1)$$

Hat die Rutsche 4 die Länge $\underline{L}$, und ist die sekundlich zu- und abfliessende Menge mit $\mu$ bezeichnet, so gilt

$$M = \mu \cdot t_d, \qquad (2)$$

wo $t_d$ die mittlere Verweildauer eines Schüttgut-Teilchens auf der Rutsche 4 bedeutet; der Zusammenhang zwischen $\underline{L}$ und $t_d$ ist gegeben durch

$$L = \frac{v_o + v_e}{2} \cdot t_d \qquad (3)$$

mit $v_e$ als der Endgeschwindigkeit des Schüttgutes auf der Rutsche 4. Prallt nun das Schüttgut auf die Prallplatte 6, so ist durch das Leitblech 8 dafür gesorgt, dass die Uebertragung der Horizontalkomponente des Impulses inelastisch erfolgt.

Für den Kraftstoss gilt dann

$$\int_{0}^{\Delta t} F_H \, dt = \Delta p_h,$$

daraus

$$\bar{F}_H \Delta t = \Delta p_h$$

und

$$\bar{F}_H = \frac{\Delta p}{\Delta t} = \frac{\Delta m}{\Delta t} \times v_e \cdot \cos\alpha.$$

Da

$$\frac{\Delta m}{\Delta t} = \mu \, ,$$

folgt für die Kraft $F_p$ auf die Prallplatte 6

$$F_p = \bar{F} = \mu . v_e . \cos \alpha \qquad (4)$$

Lösung des Systems der Gleichungen (1) bis (4) ergibt

$$\mu = \sqrt{\frac{F_R \, F_p \, (1+e)}{2gL \cos^2 \alpha}} \, , \qquad (5)$$

wobei

$$v_e + v_o = v_e . (1 + e) \qquad (6)$$

substituiert wurde, also

$$e = \frac{v_o}{v_e} . \qquad (7)$$

Für die mit 5 und 7 bezeichneten Kraftmesser sind grundsätzlich alle bekannten Typen einsetzbar, sofern sie entweder eine Parallelführung integriert enthalten, oder mit einer solchen versehen, bzw. in eine solche eingebaut sind.

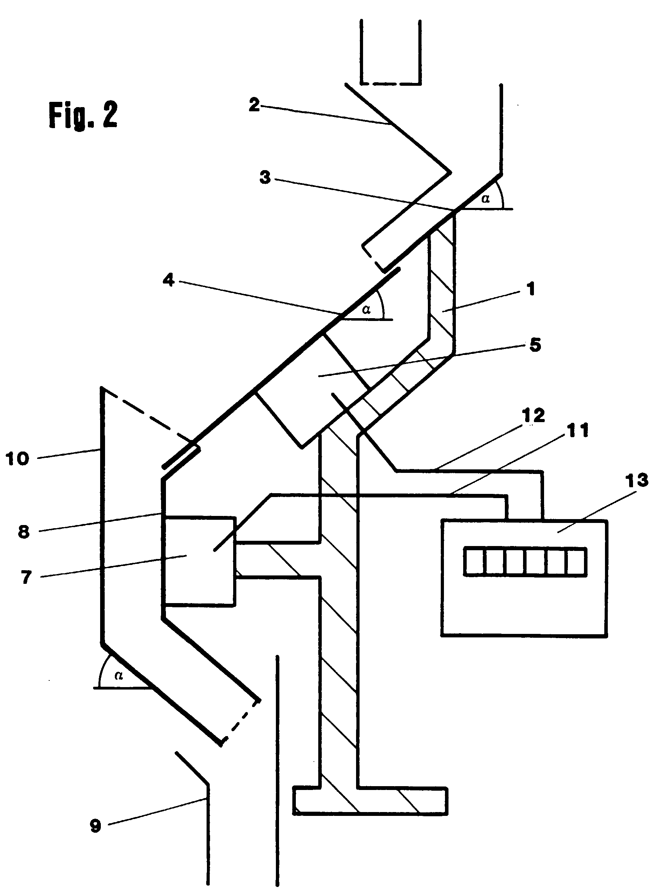

Ein zweites Ausführungsbeispiel des Erfindungsgegenstandes zeigt Fig. 2. Hier ist die durchgehend vertikale Prallplatte 6 ersetzt durch eine abgewinkelte Prallplatte 10. Das Schüttgut verlässt die um den Winkel $\alpha$ geneigte Rutsche 4 wie im Ausführungsbeispiel gemäss Fig. 1 und prallt gegen den oberen vertikalen Teil der Prallplatte 10 und wird durch den unteren, wiederum um den Winkel $\alpha$ geneigten Teil der Prallplatte 10 in die Gegenrichtung umgelenkt. Das Schüttgut überträgt auf die Prallplatte 10 also einerseits die doppelte Kraft gegenüber dem vorigen Ausführungsbeispiel (wegen der doppelten Impulsänderung), anderseits noch eine Zusatzkraft aus der Impulszunahme durch die Geschwindigkeitszunahme $\Delta v$ vom Ende der Rutsche 4 bis zum Ende der Prallplatte 10.

Anstatt der Gleichung (4) gilt dann

$$F_p = 2 \mu v_e \cos \alpha \, (1+f) \qquad (8)$$

mit

$$f = \frac{\Delta v}{v_e} \qquad (9)$$

Anstelle des Resultates von Gl. (5) ergibt sich dann

$$\mu = \sqrt{\frac{F_R . F_p \, (1+e)(1+f)}{gL \cos^2 \alpha}} \qquad (10)$$

Sowohl $e$ als auch $f$ sind weitgehend durch die gewählte Geometrie definierte Grössen, die durch das zu messende Schüttgut und die zeitbezogene Menge $\mu$ nur wenig modifiziert werden.

Sowohl in Fig. 1, als auch in Fig. 2 sind zwei Leitungen 11, 12 eingetragen, die die zwei Kraftmesser 5, 7 mit einem Rechner 13 verbinden. Der Rechner 13 enthält die Auswerteformel und sowohl die apparativen Parameter, als auch die spezifischen Korrekturwerte gespeichert. Solche Rechner sind bekannt und weit verbreitet im Einsatz.

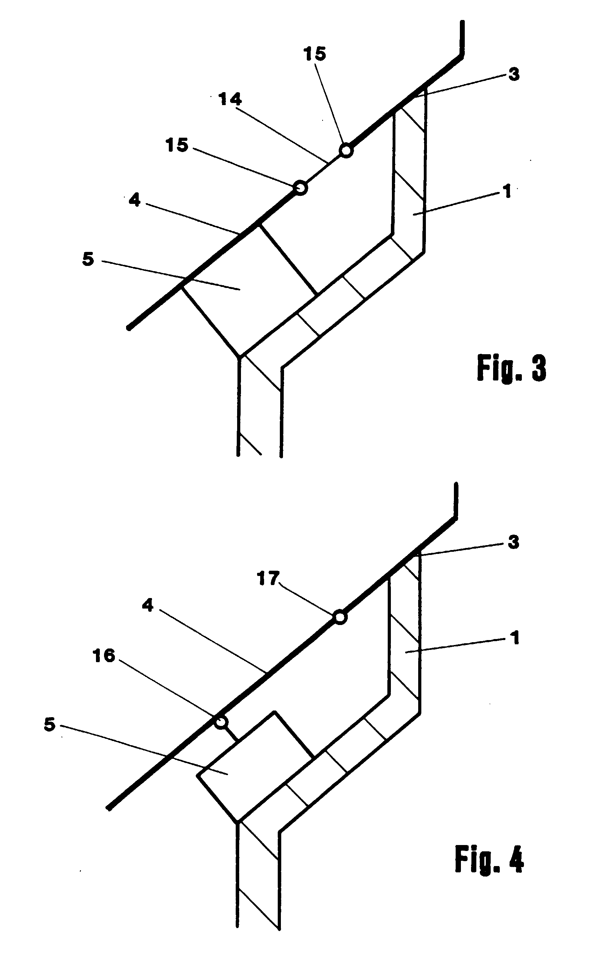

Fig. 3 zeigt einen Teil der Fig. 1 und 2 in einer Variante eines Details. Hier steht die Gleitbahn 3 nicht über die Rutsche 4 hinaus, sondern ist durch ein Verbindungsblech 14 mit zwei elastischen Gelenken 15 mit dieser verbunden. Im Betrieb mit konstantem Massenfluss, der sich in aller Regel in sehr kurzer Zeit einstellt, wird die Hälfte der auf das Verbindungsblech 14 wirkenden Gewichtskraft auf die Rutsche 4 übertragen, was ihre Länge rechnerisch leicht verlängert. Die Auswerteformeln Gl. (4) und Gl. (10) behalten - mit modifiziertem L - ihre Gültigkeit.

Fig. 4 zeigt den gleichen Vorrichtungsteil wie Fig. 3 mit einer weiteren Variante der Verbindung von Gleitbahn 3 und Rutsche 4. Die Rutsche 4 ist hier nicht durch den Kraftmesser 5 parallel geführt, sondern die Krafteinleitung geschieht punktuell über ein elastisches Gelenk 16. Die Rutsche 4 ist oben über ein weiteres elastisches Gelenk 17 mit dem Ende der Gleitbahn 3 verbunden. Grundsätzlich wird daher das durch die auf der Rutsche 4 befindliche schwere Masse erzeugte Drehmoment ermittelt. Da die Massenverteilung jedoch konstant und über weite Bereiche mengenunabhängig ist, beeinflusst diese konstruktive erfinderische Variante nur den rechnerischen Wert der Länge L der Rutsche 4.

Die Varianten gemäss Fig. 3, 4 sind wahlweise mit beiden Ausführungsbeispielen gemäss Fig. 1, 2 kombinierbar.

Es ist selbstverständlich im Sinne der Erfindung, die Rutsche 4 so einzubauen, dass das Schüttgut zuerst auf die Prallplatte 6, bzw. 10 trifft und nachher über die Rutsche 4 gleitet. Die Gleitbahn 3 übernimmt dann die Aufgabe, die Endgeschwindigkeit $v_e$ zu definieren. Die für die Rutsche 4 wesentlichen Grössen der Anfangs- und Endgeschwindigkeit lassen sich aus den so gewählten geometrischen Parametern leicht ermitteln.

## Patentansprüche

1.  Vorrichtung zum kontinuierlichen Wägen von Schüttgut mit einer Prallplatte (6, 10) und elektronischen Mitteln zur Auswertung, dadurch gekennzeichnet, dass

    -   die Prallplatte (6, 10) mindestens teilweise vertikal ist, und ein erster Kraftmesser (7) vorhanden ist, der die Prallplatte (6, 10) in horizontaler Richtung parallel führt und die auf die Prallplatte (6, 10) wirkende Horizontalkraft misst,
    -   Mittel vorhanden sind, um den Schüttgutstrom mit einer bestimmten Geschwindigkeit unter einem bestimmten Winkel gegen die Prallplatte (6, 10) zu leiten,
    -   eine unter einem Winkel $\alpha$ gegen die Horizontale geneigte Rutsche (4) vorhanden ist, über welche das Schüttgut gleitet, und dass ein zweiter Kraftmesser (5) vorhanden ist, der im wesentlichen die Kraft misst, welche das Schüttgut senkrecht zur Oberfläche der Rutsche (4) ausübt,
- eine Gleitbahn (3) vorhanden ist, welche den gleichen Neigungswinkel aufweist, wie die Rutsche (4), welche Gleitbahn (3) dem Schüttgut eine bestimmte Geschwindgkeit erteilt.

2. Vorrichtung zum kontinuierlichen Wägen von Schüttgut nach Patentanspruch 1, dadurch gekennzeichnet, dass

- die Gleitbahn (3) der Rutsche (4) vorgeschaltet ist,
- die Mittel, um den Schüttgutstrom mit einer bestimmten Geschwindigkeit und unter einem bestimmten Winkel gegen die Prallplatte (6, 10) zu leiten, aus der Rutsche (4) bestehen.

3. Vorrichtung zum kontinuierlichen Wägen von Schüttgut nach Patentanspruch 1, dadurch gekennzeichnet, dass

- die Mittel, um den Schüttgutstrom mit einer bestimmten Geschwindigkeit und unter einem bestimmten Winkel gegen die Prallplatte (6, 10) zu leiten, aus der Gleitbahn (3) bestehen,
- die Rutsche (4) der Prallplatte (6, 10) nachgeschaltet ist, dergestalt, dass das Schüttgut nach der Prallplatte (6, 10) auf die Rutsche (4) gerät.

4. Vorrichtung zum kontinuierlichen Wägen von Schüttgut nach Patentanspruch 1, dadurch gekennzeichnet, dass die Rutsche (4) parallelgeführt ist.

5. Vorrichtung zum kontinuierlichen Wägen von Schüttgut nach Patentanspruch 2 und 4, dadurch gekennzeichnet, dass ein Verbindungsblech (14) vorhanden ist, welches die Gleitbahn (3) mit der Rutsche (4) über je ein elastisches Gelenk (15) verbindet.

6. Vorrichtung zum kontinuierlichen Wägen von Schüttgut nach Patentanspruch 2, dadurch gekennzeichnet, dass die Rutsche (4) mit der Gleitbahn (3) durch ein einziges elastisches Gelenk (17) verbunden ist, und ein weiteres elastisches Gelenk (16) vorhanden ist, über welches sich die Rutsche (4) auf den zweiten Kraftmesser (5) abstützt.

7. Vorrichtung zum kontinuierlichen Wägen von Schüttgut nach einem der Patentansprüche 1 bis 6, dadurch gekennzeichnet, dass die Prallplatte (6) ganz vertikal und mit einem parallel zu ihr verlaufenden Leitblech (8) verbunden ist, welches sich nach oben trichterförmig erweitert.

8. Vorrichtung zum kontinuierlichen Wägen von Schüttgut nach einem der Patentansprüche 1 bis 6, dadurch gekennzeichnet, dass die Prallplatte (10) an ihrem unteren Ende abgewinkelt ist, welcher abgewinkelte Teil den gleichen Winkel $\alpha$ gegen die Horizontale einnimmt, wie die Rutsche (4).

**Claims**

1. An apparatus for the continuous weighing of bulk or poured material with a baffle plate (6, 10) and electronic means of evaluation, characterised in that

- the baffle plate (6, 10) is at least partially vertical, and a first dynamometer (7) is provided, which runs parallel to the baffle plate (6,10) in a horizontal direction and measures the horizontal force working on the baffle plate (6, 10),
- means are provided to direct the stream of poured material at a set speed and at a set angle onto the baffle plate (6, 10),
- a slide (4) is provided at an angle $\alpha$ to the horizontal, over which the poured material slides, and that a second dynamometer (5) is provided, which essentially measures the force which the poured material exerts vertically on the surface of the slide (4),
- a chute (3) is provided, which exhibits the same angle of inclination as slide (4), which chute (3) imparts a set speed to the poured material.

2. An apparatus for the continuous weighing of poured material in accordance with Patent Claim 1, characterised in that

- the chute (3) is arranged before the slide (4),
- the means of imparting a set speed to the stream of poured material and directing it at a set angle onto the baffle plate (6, 10) comprise the slide (4).

3. An apparatus for the continuous weighing of poured material in accordance with Patent Claim 1, characterised in that

- the means whereby the poured material is directed at a set speed and at a set angle against the baffle plate (6, 10), comprise the chute (3),
- the slide (4) is arranged following the baffle plate (6, 10), and so formed that the poured material comes onto the slide (4) after the baffle plate (6, 10).

4. An apparatus for the continuous weighing of poured material in accordance with Patent Claim 1, characterised in that slide (4) is arranged parallel.

5. An apparatus for the continuous weighing of poured material in accordance with Patent Claims 2 and 4, characterised in that a connecting sheet (14) is provided, which connects the chute (3) with the slide (4), in each case via an elastic link (15).

6. An apparatus for the continuous weighing of poured material in accordance with Patent Claim 2, characterised in that the slide (4) is connected to the chute (3) by a single elastic link (17) and a further elastic link (16) is provided via which the slide (4) is supported on the second dynamometer (5).

7. An apparatus for the continuous weighing of poured material in accordance with one of the Patent Claims 1 to 6, characterised in that the baffle plate (6) is entirely vertical and joined to a guide sheet (8) running parallel to it, which opens out like a funnel at the top.

8. An apparatus for the continuous weighing of poured material in accordance with one of the Patent Claims 1 to 6, characterised in that the baffle plate (10) is formed to an angle at its lower end, which angled portion has the same angle $\alpha$ to the horizontal as slide (4).

**Revendications**

1. Dispositif pour peser en continu un matériau en vrac, comportant une plaque de choc (6, 10) et des moyens électroniques pour l'évaluation, caractérisé en ce que

   - la plaque de choc (6, 10) est au moins en partie verticale, et il est prévu un premier dynamomètre (7) qui guide la plaque de choc (6, 10) parallèlement dans le sens horizontal et qui mesure la force horizontale agissant sur la plaque de choc (6, 10),
   - il est prévu des moyens pour amener un écoulement de matériau en vrac à une vitesse définie et suivant un angle défini vers la plaque de choc (6, 10),
   - il est prévu une goulotte (4) inclinée par rapport à l'horizontale suivant un angle $\alpha$, sur laquelle glisse le matériau en vrac, et en ce qu'il est prévu un second dynamomètre (5) qui mesure essentiellement la force exercée par le matériau en vrac perpendiculairement à la surface de la goulotte (4), et
   - il est prévu une glissière (3) qui présente le même angle d'inclinaison que la goulotte (4) et qui imprime au matériau en vrac une vitesse définie.

2. Dispositif pour peser en continu un matériau en vrac selon la revendication 1, caractérisé en ce que

   - la glissière (3) est montée en aval de la goulotte (4), et
   - les moyens prévus pour amener l'écoulement de matériau en vrac à une vitesse définie et suivant un angle défini vers le plaque de choc (6, 10) se composent de la goulotte (4).

3. Dispositif pour peser en continu un matériau en vrac selon la revendication 1, caractérisé en ce que

   - les moyens prévus pour amener l'écoulement de matériau en vrac à une vitesse définie et suivant un angle défini vers la plaque de choc (6, 10) se composent de la glissière (3), et
   - la goulotte (4) est montée en amont de la plaque de choc (6, 10), de telle sorte que le matériau en vrac arrive sur la goulotte (4) après la plaque de choc (6, 10).

4. Dispositif pour peser en continu un matériau en vrac selon la revendication 1, caractérisé en ce que la goulotte (4) a un mouvement parallèle.

5. Dispositif pour peser en continu un matériau en vrac selon les revendications 2 et 4, caractérisé en ce qu'il est prévu une tôle de liaison (14) qui relie la glissière (3) à la goulotte (4) par l'intermédiaire d'articulations élastiques (15).

6. Dispositif pour peser en continu un matériau en vrac selon la revendication 2, caractérisé en ce que la goulotte (4) est reliée à la glissière (3) par une seule articulation élastique (17), tandis qu'il est prévu une seconde articulation élastique (16) par l'intermédiaire de laquelle la goulotte (4) s'appuie sur le second dynamomètre (5).

7. Dispositif pour peser en continu un matériau en vrac selon l'une des revendications 1 à 6, caractérisé en ce que la plaque de choc (6) est entièrement verticale et est reliée à une chicane (8) parallèle qui va en s'élargissant en forme d'entonnoir vers le haut.

8. Dispositif pour peser en continu un matériau en vrac selon l'une des revendications 1 à 6, caractérisé en ce que la plaque de choc (10) est coudée à son extrémité inférieure, la partie coudée présentant par rapport à l'horizontale le même angle $\alpha$ que à la goulotte (4).

EP 0 593 699 B1

**Fig. 1**

2

3

α

α

1

4

5

6

12

8

11

7

9

13

6

**Fig. 2**

**Fig. 3**

**Fig. 4**